(19) Europäisches Patentamt
European Patent Office
Office européen des brevets

(11) **EP 4 362 260 A1**

(12) **EUROPEAN PATENT APPLICATION**

(43) Date of publication:
**01.05.2024 Bulletin 2024/18**

(21) Application number: **22383036.5**

(22) Date of filing: **27.10.2022**

(51) International Patent Classification (IPC):
***H02J 3/00*** (2006.01)    ***H02J 3/38*** (2006.01)
***H02J 3/46*** (2006.01)

(52) Cooperative Patent Classification (CPC):
**H02J 3/001; H02J 3/381; H02J 3/466;**
H02J 2203/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **eRoots Analytics SL**
  **08039 Barcelona (ES)**
• **Universitat politécnica de Catalunya (UPC)**
  **08034 Barcelona (ES)**

(72) Inventors:
• **CHEAH MAÑÉ, Marc**
  **08014 Barcelona (ES)**
• **FANALS BATLLORI, Josep**
  **17100 La Bisbal d'Empordà (ES)**
• **GOMIS BELLMUNT, Oriol**
  **08006 Barcelona (ES)**
• **PRIETO ARAUJO, Eduardo**
  **08330 Premià de Mar (ES)**
• **SONG, Jie**
  **08014 Barcelona (ES)**

(74) Representative: **Torner, Juncosa I Associats, SL
C / Pau Claris, 108, 1r 1a
08009 Barcelona (ES)**

(54) **METHOD FOR THE STEADY STATE COMPUTATION OF POWER SYSTEMS WITH POWER ELECTRONIC CONVERTERS/VSC**

(57)    A method for steady-state computation of power systems with power electronics converters/VSCs is proposed. The method comprises providing and solving a non-linear system of equations that represent the power flow including power converters and three types of buses: PQ, PV and slack; providing an additional set of equations that are responsible for limiting the current of the power converters in saturation states when a short circuit fault occurs; computing the squared absolute value of the current that should be limited, involving computing the product between the current and the complex conjugated current; find out variations of the unknown voltage magnitude and unknown phase of the voltage in the buses when they are unknow; updating the unknown voltage magnitude and unknown phase of the voltage; repeating previous calculations until convergence is reached.

**Fig.4**

**Description**

Technical field

This invention is related to the formulation analysis and computation of the power flow for electrical grids with power converters, which operate at their maximum current under short-circuit fault conditions so as not to com- promise their integrity.

Background of the Invention

CN102522746A discloses a voltage source converter type high-voltage direct current transmission (VSC-HVDC) AC/DC (alternating current/direct current) optimal power flow method based on a point algorithm, comprising the following steps:

- deducing a steady state power flow model according to the steady state characteristics of VSC-HVDC, and deducing a number of control modes and combination modes thereof of the VSC-HVDC; and

- deducing a number of control modes and combination modes thereof according to the working characteristics of the VSC-HVDC.

The CN102522746A document strategies considers that the converters involved can work in different control modes. However, all of these different control modes assume a nonsaturation operating state.

CN110718918A relates to a power flow calculation method based on an HVAC and LCC-VCC-HVDC hybrid system. The power flow calculation method here disclosed comprises the following main steps:

(1) establishing an AC-DC hybrid system model which mainly comprises an AC-DC hybrid VSC converter station model and an AC-DC hybrid LCC converter station model;

(2) performing coordinated control on the AC-DC hybrid system; and

(3) utilizing a Newton-Raphson method based on Taylor series expansion to calculate the steady-state power flow of the AC-DC hybrid system.

According to CN110718918A, a droop control mechanism is considered, and multi-control scene application of AC-DC hybrid system steady-state analysis is enriched.

However, the method disclosed in CN110718918A does not consider the current limits of the power electronics equipment. The algorithm is based on adapting the Newton-Raphson method, but without performing short-circuit analysis.

On the contrary the method for Steady-State Computation of Power Systems With Power Electronics Converters/VSCs of this invention includes in the analysis and computation as a key part, the current saturation of the converters. In addition, and as a consequence of taking saturation into account, different operating states and new bus types are derived.

Brief explanation of the Figures

The foregoing will be more fully understood from the following Figures to be taken in an illustrative and non-limitative manner, in which:

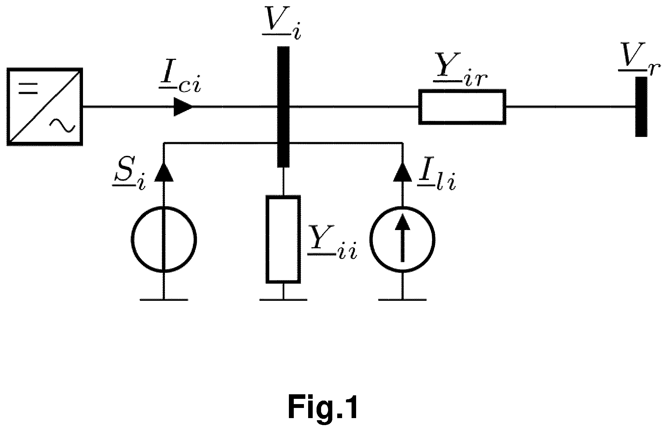

Figure 1 shows the scheme from where the equation of the converter current magnitude is derived. The bus i under study has a current source, a power source, a converter, and impedances (a shunt element and links to other buses) connected to it.

Fig. 2 is a diagram illustrating the procedure to obtain the solution of the system of equations from the initial objects. The iterations stop once the maximum residual (or mismatch) is no longer larger than an established tolerance E.

Fig. 3 discloses the Overall Workflow to identify the System Operation Point.

Fig. 4 is a representation of the prefault (on the left side) and the postfault (right side) equivalent systems, with a converter.

Description of the Invention

The present invention concerns to a method for Steady-State Computation of Power Systems in electrical grids With Power Electronics Converters/VSCs, as defined in claim 1, comprising following steps already known and in use in the prior art:

> providing a non-linear system of equations that represent the power flow of a power system including power converters and three types of buses: PQ, PV and slack;

> solving said non-linear system of equations by a root-finding algorithm such as a Newton-Raphson algorithm which produces successively better approximations to the roots or zeroes of a real-valued function, the system of equations involving the voltage magnitude and the phase of the voltage in the buses when they are unknow; and

> iterating, when solving the non-linear system of equations, for increments of phase and magnitude, so that in each iteration the unknown voltage magnitude and unknown phase of the voltage are updated,

In contrast with the referred conventional measures, the inclusion and management of power converters according to this invention involves the management of the current as a magnitude to be controlled. Hence, the power flow solver contains an additional set of equations responsible for limiting the current of the converters when short-circuit faults occur. States where the current is limited will be referred here to as saturation states.

By Kirchhoff's current law, the current balance in bus $i$ is:

$$ \underline{I}_{ci} = \underline{V}_i \underline{Y}_{ii} + \sum_{r \neq i} \underline{Y}_{ir} \underline{V}_r - \underline{I}_{li} - \underline{S}_i^* / \underline{V}_i^*, $$

or in matrix form:

$$ \boldsymbol{I_c} = \boldsymbol{YV} - [\boldsymbol{V^*}]^{-1} \boldsymbol{S^*} - \boldsymbol{I_l} , $$

The phase of the converter current $\boldsymbol{I_c}$ is constructively irrelevant. It affects the distribution of current between active and reactive components, yet it is the absolute value of the current that determines if the converter ends up damaged under short-circuit conditions. One approach here proposed to work with the absolute value of the current is to compute the product between the current and the complex conjugated current:

$$ f_{I^2} = \boldsymbol{I_c} \boldsymbol{I_c^*}, $$

Hence, the new squared current residual becomes:

$$ \Delta f_{I^2} = -\boldsymbol{I}_{c,\max}^2 + (\boldsymbol{YV} - [\boldsymbol{V^*}]^{-1} \boldsymbol{S^*} - \boldsymbol{I_l}) \cdot (\boldsymbol{YV} - [\boldsymbol{V^*}]^{-1} \boldsymbol{S^*} - \boldsymbol{I_l})^*, $$

where $\boldsymbol{I}_{c,\max}^2$ is the vector of squared maximum currents supported by the converters. The remaining unknowns are still the phase and the voltage magnitude. The terms of the Jacobian to be calculated are:

$$\begin{cases} \dfrac{d\boldsymbol{f}_{I2}}{d\theta} = [\boldsymbol{I_c}]\left(\dfrac{d\boldsymbol{I_c}}{d\theta}\right)^* + [\boldsymbol{I_c}]^*\left(\dfrac{d\boldsymbol{I_c}}{d\theta}\right), \\[3mm] \dfrac{d\boldsymbol{f}_{I2}}{d\boldsymbol{\nu}} = [\boldsymbol{I_c}]\left(\dfrac{d\boldsymbol{I_c}}{d\boldsymbol{\nu}}\right)^* + [\boldsymbol{I_c}]^*\left(\dfrac{d\boldsymbol{I_c}}{d\boldsymbol{\nu}}\right), \end{cases}$$

where the derivatives are:

$$\begin{cases} \dfrac{d\boldsymbol{I_c}}{d\theta} = j\left(\boldsymbol{Y}[\boldsymbol{V}] - [\boldsymbol{S}]^*[\boldsymbol{V}^*]^{-1}\right), \\[3mm] \dfrac{d\boldsymbol{I_c}}{d\boldsymbol{\nu}} = \left([\boldsymbol{S}]^*[\boldsymbol{V}^*]^{-1} + \boldsymbol{Y}[\boldsymbol{V}]\right)[\boldsymbol{\nu}]^{-1}, \end{cases}$$

With this, the whole system of equations becomes:

$$\begin{pmatrix} \boldsymbol{\Delta f_P} \\ \boldsymbol{\Delta f_Q} \\ \boldsymbol{\Delta f_{I2}} \end{pmatrix} = - \begin{pmatrix} \dfrac{df_P}{d\theta} & \dfrac{df_P}{d\nu} \\[2mm] \dfrac{df_Q}{d\theta} & \dfrac{df_Q}{d\nu} \\[2mm] \dfrac{df_{I2}}{d\theta} & \dfrac{df_{I2}}{d\nu} \end{pmatrix} \begin{pmatrix} \boldsymbol{\Delta\theta} \\ \boldsymbol{\Delta\nu} \end{pmatrix},$$

Referred equation is solved to find the variations of the unknowns. The unknowns are then updated as indicated in the following equation:

$$\begin{cases} \theta^{(k+1)} = \theta^{(k)} + \boldsymbol{\Delta\theta}, \\[3mm] \boldsymbol{\nu}^{(k+1)} = \boldsymbol{\nu}^{(k)} + \boldsymbol{\Delta\nu}, \end{cases}$$

Then, if the residuals are still too large, these steps are repeated until convergence is reached.

Converters included into the power system are supposed to be able to operate in four different states. In the unsaturated state (USS), the converter operates as a regular PQ/PV bus. When working in the partially saturated state (PSS), the converter injects the maximum current and specifies a given voltage magnitude or reactive power. In fully saturated state (FSS), the converter works at the maximum current and injects no active power (P = 0) [. The fourth state corresponds to a disconnected (DIS) converter, as if it was non-existent. This case can be modelled by setting P = 0 and Q = 0, for instance. Following Table 1 summarizes the type of bus in accordance with the converter state.

Table 1. Traditional types of buses and mapping to types of buses depending on the converter state.

| Converter State | PQ Control | PV Control |
|---|---|---|
| USS | PQ | PV |
| PSS | QI | VI |
| FSS | PI | PI |
| DIS | PQ | PQ |

Traditional PQ and PV buses are mapped to PQ, PV, QI, PI, and VI buses. In this regard, the saturation of converters forces the presence of the novel PI, QI, and VI buses.

Iteration of Converters Operation States:

Power electronics converters can operate in different states. On one side, they could be tripped off in case of losing the voltage reference. On another side, the converter control saturates the current to avoid being overloaded (assuming it still remains connected). The potential current-saturation modifies the converter operation, which is also considered as different states of operation. The different states of converters should be considered in the computation of system operation points. This is especially critical for short-circuit calculation as the converters close to the fault location will be operated with a reduced voltage, which makes them disconnected or operated with a saturated current.

Usually, the operation state of a converter in a specific scenario is uncertain. Therefore, an iterative algorithm is here proposed to obtain the converters operation states in order to calculate the system operation points that satisfies all converter limits. This iterative process serves as the outer loop that updates converter operation states while the inner loop defines and solves the equations modeling the studied system corresponding the given states of converters, which has been explained in the previous section. In particular, the outer loop updates the converters states for each outer loop iteration n + 1 based on the solution obtained from the previous iteration n, which is calculated by the inner loop solver.

With regard to the connection States of the Converters according to a proposal of this invention, the converter will be tripped off when the converter connection point (CCP) voltage is lower than the threshold value. Therefore, the connection status of a converter can be updated as follows based on the obtained solution such that:

$$x_i = \begin{cases} Connected & \text{if } u_i \geq u_{\text{thre}-i} \ , \\ Disconnected & \text{if } u_i < u_{\text{thre}-i} \ , \end{cases}$$

where $x_i$ is the activation state of the converter connected to bus $i$, $u_i$ is the voltage magnitude of bus $i$ (which is also the CCP voltage magnitude) and $u_{thre-i}$ is the voltage threshold to trip off the converter.

When a converter has been identified as remaining connected to the AC grid following the criterion expressed in the latter connection status indication for an iteration n + 1, it is also necessary to update its current-saturation states. A similar scheme can be adopted to update the converters current-saturation states based on the solution obtained from the previous iteration n. In particular, this invention takes the converter in PQ control as an example to explain the implementation of the methodology to update converters saturation states. However, the similar approach can be applied to converters with different control strategies (e.g. PV, grid-support and grid-forming modes).

The current-saturation states for the converter in PQ control are updated also based on the limits in terms of its CCP voltage magnitudes such that:

$$\begin{cases} \underbrace{\sqrt{p_{ref}^2 + q_{ref}^2}/i_{vsc}^{\max} \leq u_{con}}_{u_{lim}^{USS}} & \text{if USS} \quad , \\ \underbrace{|q_{ref}|/i_{vsc}^{\max}}_{u_{lim}^{FSS}} \leq u_{con} < \underbrace{\sqrt{p_{ref}^2 + q_{ref}^2}/i_{vsc}^{\max}}_{u_{lim}^{USS}} & \text{if PSS} \quad , \\ u_{con} < \underbrace{|q_{ref}|/i_{vsc}^{\max}}_{u_{lim}^{FSS}} & \text{if FSS} \quad , \end{cases}$$

where $u_{lim}^{USS}$ is the upper limit of the CCP voltage magnitude for converter operated in USS and is the upper limit for FSS. The current-saturation state of a converter, $x_i$, can be updated based on an obtained solution, *sol,* utilizing a function, *DS(sol, i),* which is expressed as follows:

$$x_i = \begin{cases} USS & \text{if } u_{\text{lim}-i}^{\text{USS}} \leq u_n & , \\ PSS & \text{if } u_{\text{lim}-i}^{\text{FSS}} \leq u_n \leq u_{\text{lim}-n}^{\text{USS}} & , \\ FSS & \text{if } u_n \leq u_{\text{lim}-i}^{\text{FSS}} & , \end{cases}$$

where $u_n$ is the voltage solution obtained at the n iteration.

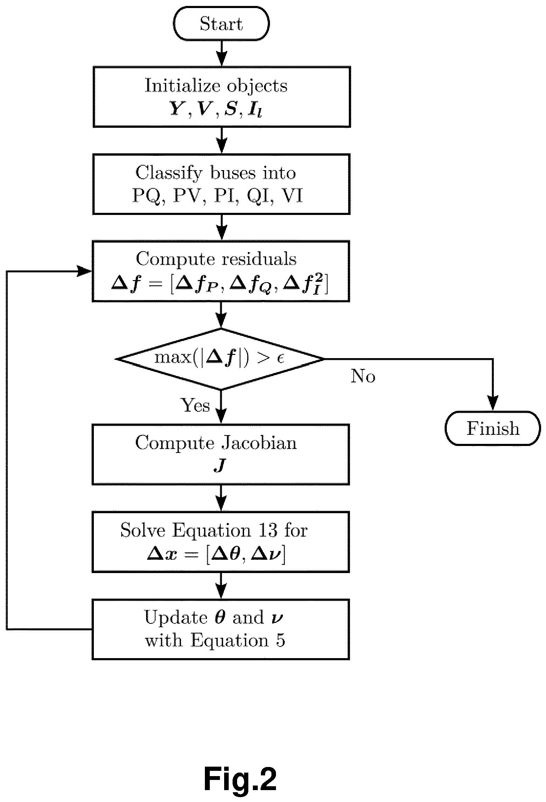

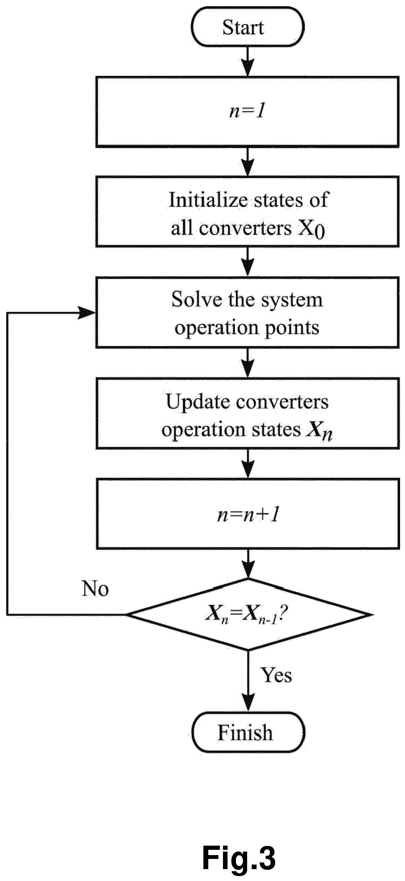

The overall workflow managed by the proposed method is summarized as shown in Fig. 3. The methodology starts with a set of initial states of all converters in the studied system, X0. The equations modeling the studied system are defined and solved in the first iteration using the solver presented in Fig. 2. The states of all converters for the upcoming iteration, n + 1, will be updated based on the solution obtained from the current iteration. In particular, the connection states are updated primarily following criteria:

$$x_i = \begin{cases} Connected & \text{if } u_i \geq u_{\text{thre}-i} \ , \\ Disconnected & \text{if } u_i < u_{\text{thre}-i} \ , \end{cases}$$

Then, for those converters who have been identified as connected, their current-saturation states will be updated also. In this regard, the current-saturation states of the converter in PQ control are obtained as expressed in:

$$x_i = \begin{cases} USS & \text{if } u_{\text{lim}-i}^{\text{USS}} \leq u_n & , \\ PSS & \text{if } u_{\text{lim}-i}^{\text{FSS}} \leq u_n \leq u_{\text{lim}-n}^{\text{USS}} & , \\ FSS & \text{if } u_n \leq u_{\text{lim}-i}^{\text{FSS}} & , \end{cases}$$

The iterative process will be terminated when the states remain unchanged for all converters, which means an operation point that satisfies all converters' limits has been obtained.

Fig. 3 illustrates the referred Overall Workflow.

As is well known, traditional power systems are composed of synchronous generators and loads. During symmetrical fault conditions, synchronous generators are typically modelled with a Thevenin equivalent as the induced electromotive force is assumed to be constant as previously indicated in:

$$\begin{cases} \boldsymbol{\theta}^{(k+1)} = \boldsymbol{\theta}^{(k)} + \boldsymbol{\Delta\theta}, \\ \boldsymbol{\nu}^{(k+1)} = \boldsymbol{\nu}^{(k)} + \boldsymbol{\Delta\nu}, \end{cases}$$

Besides, synchronous generators do not include controls to limit the current in the case of faults. They can stand peaks of current during short periods of time as per:

$$\begin{cases} \dfrac{df_P}{d\theta} = \Re(j[V]([Y^*V^*] - Y^*[V^*])), \\[2mm] \dfrac{df_Q}{d\theta} = \Im(j[V]([Y^*V^*] - Y^*[V^*])), \\[2mm] \dfrac{df_P}{d\nu} = \Re([V]([Y^*V^*] + Y^*[V^*])[\nu]^{-1}), \\[2mm] \dfrac{df_Q}{d\nu} = \Im([V]([Y^*V^*] + Y^*[V^*])[\nu]^{-1}), \end{cases}$$

Loads are represented by shunt impedances that consume the prespecified power at nominal voltage conditions. Therefore, the initial system represented by non-linear equations is transformed into a grid formed only by voltage sources and impedances. By definition, this is a linear system to be solved using the superposition principle (considering prefault and postfault conditions) and well-known circuit theory techniques. There is no need to rely on iterative schemes such as the Newton-Raphson.

On the other hand, voltage source converters (VSCs) have to carefully limit the current so as not to surpass their limitations, which are in turn imposed by their semiconductors [SCs invalidate the possibility of solving the short-circuit by adding the prefault and postfault results. It could be the case that VSCs operate unsaturated before the fault, only to become saturated after the fault. The control references will invariably change, hence VSCs would have to somehow remain connected in the postfault analysis.

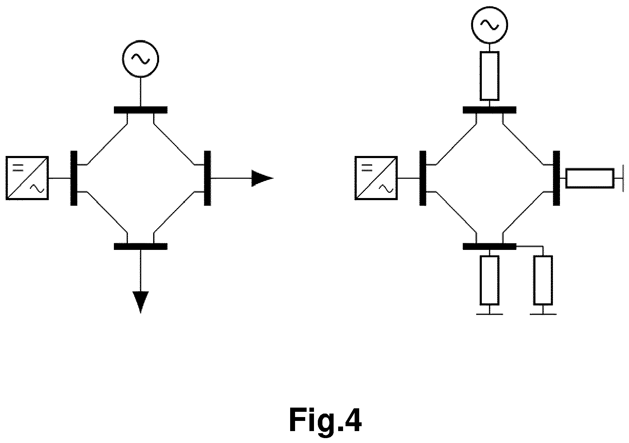

Fig.4 exemplifies the proposed prefault and postfault situations.

The prefault system (on the left side) includes a converter, a synchronous generator, and a couple of loads. It will be assumed the VSC from the initial set of state are unsaturated during these prefault conditions. Therefore VSCs are viewed as non-linear elements due to the non-linearities found in the P and Q equations (see following equation):

$$\begin{cases} P = \Re([V]Y^*V^*), \\[2mm] Q = \Im([V]Y^*V^*), \end{cases}$$

During the short-circuit fault, which is represented by an impedance (Fig. 4, bottom right side of the right side figure), loads and synchronous generators are modelled as linear devices. However, VSCs have to be treated as non-linear elements according to the states defined in referred Table 1. Perhaps the converter becomes saturated due to the heavy inrush of current, although even if it remains unsaturated, it will act as a non-linear device. This justifies the assigned name of "hybrid solver" since some elements are viewed as linear and others as non-linear.

Due to the presence of a single non-linear device, the system of equations becomes nonlinear by definition. It is meant to be solved by the procedure described in Figure 2. The linearization of the loads obeys:

$$\underline{Z}_i = \frac{V_i^2}{\underline{S}_i^*},$$

where $\underline{Z}_i$ is the impedance by which a load of value $\underline{S}_i$ is transformed into a linear device, and $V^2$ is the squared absolute value of the bus where the load is connected. Equation 17 applies to all $i$ loads.

The Thevenin equivalent of the synchronous generators is composed of a purely inductive impedance $jXg$ as well as the induced electromotive force E. While $jXg$ is a known magnitude provided by the manufacturer, E is found with:

$$\underline{E}_i = \underline{V}_i + jX_{g,i}\underline{I}_{\mathrm{inj},i},$$

where i is the index that covers all generators, V i is the prefault voltage at the bus where the generator i is connected, and I inj,i is the injected current by the generator in prefault conditions.

The steps to cover by the hybrid solver are summarized below:

1. Initialize the objects Y , V , S, II and classify the buses into PQ, PV, PI, QI, VI.
2. Solve the non-linear system of equations iteratively until a low error is reached. It basically implies following the steps inside the loop of Figure 2. With this, the prefault solution is obtained.
3. Linearize loads with Equation:

$$\underline{Z}_i = \frac{V_i^2}{\underline{S}_i^*},$$

synchronous generators with their corresponding Thevenin equivalent as per the following Equation:

$$\underline{E}_i = \underline{V}_i + jX_{g,i}\underline{I}_{\mathrm{inj},i} \quad .$$

and modify Y to include the fault impedance.
4. Solve the hybrid system formed by linear synchronous generators and loads and nonlinear converters. Objects Y, V and S are modified and the looping steps in Figure 2 are followed.

It is worth mentioning that modelling synchronous generators with Thevenin equivalents causes the addition of one extra bus for each generator. Even if they are essentially the same, Norton equivalents are preferable because they do not introduce an additional bus. Thus, the size of the hybrid system becomes identical to the size of the non-linear system.

The scope of the present invention is defined by the claims that follow.

## Claims

1.  A method for steady-state computation of power systems with power electronics converters, VSCs, comprising:

providing, to a processing unit, a non-linear system of equations that represent the power flow of a power system including power converters and three types of buses: PQ, PV and slack;
solving, by said processing unit, said non-linear system of equations by executing a root-finding algorithm which produces successively better approximations to roots or zeroes of a real-valued function, the non-linear system of equations considering a voltage magnitude and a phase of the voltage in the buses when they are unknow; and
iterating, when solving the non-linear system of equations, for increments of phase and magnitude, so that in each iteration the unknown voltage magnitude and unknown phase of the voltage are updated,

the method further comprising:

a) providing an additional set of equations that are responsible for limiting the current of the power converters in saturation states when a short circuit fault occurs with the aim of avoiding that the power converters end up damaged under short-circuit conditions, the solving of these additional set of equations involving the treatment of current as a magnitude to be controlled,
wherein the power converters in saturation states are operable in two different states: partially saturated state, PSS, and fully saturated state, FSS;
b) computing the squared absolute value of the current that should be limited, so that the whole system of equations becomes the following equations:

$$\begin{pmatrix} \Delta f_P \\ \Delta f_Q \\ \Delta f_{I^2} \end{pmatrix} = - \begin{pmatrix} \dfrac{df_P}{d\theta} & \dfrac{df_P}{d\nu} \\ \dfrac{df_Q}{d\theta} & \dfrac{df_Q}{d\nu} \\ \dfrac{df_{I^2}}{d\theta} & \dfrac{df_{I^2}}{d\nu} \end{pmatrix} \begin{pmatrix} \Delta\theta \\ \Delta\nu \end{pmatrix},$$

c) solving the equations of step b) to find out variations of the unknown voltage magnitude and unknown phase of the voltage in the buses when they are unknown;

d) updating the unknown voltage magnitude and unknown phase of the voltage by means of the following equations:

$$\begin{cases} \theta^{(k+1)} = \theta^{(k)} + \Delta\theta, \\ \nu^{(k+1)} = \nu^{(k)} + \Delta\nu, \end{cases}$$

and,

e) repeating steps a) to d) until convergence is reached.

2. The method according to claim 1, wherein the computed squared absolute value of the current involves computing the product between the current and the complex conjugated current involved,

$$f_{I^2} = I_c I_c^*,$$

whereby the new squared current residual becomes:

$$\Delta f_{I^2} = -I_{c,\max}^2 + \left(YV - [V^*]^{-1}S^* - I_l\right) \cdot \left(YV - [V^*]^{-1}S^* - I_l\right)^*,$$

where $I_{c,\max}^2$ is the vector of squared maximum currents supported by the power converters.

3. The method according to any one of the previous claims, further comprising including new types of buses PI, QI and VI in the computation to consider the saturation of the power converters, wherein the new types of buses depend on the states of the power converters.

4. The method according to claim 3, further comprising tripping of a given power converter of the power converters in saturation states when a connection point, CCP, voltage of the given power converter is lower that a given threshold value, whereby a connection status of the power converter can be updated as followed based on the obtained solution:

$$x_i = \begin{cases} Connected & \text{if } u_i \geq u_{\text{thre}-i}, \\ Disconnected & \text{if } u_i < u_{\text{thre}-i}, \end{cases}$$

where $x_i$ is the activation state of the power converter connected to bus *i*, $u_i$ is the voltage magnitude of bus *i, which* is also the CCP voltage magnitude, and $u_{thre-i}$ is the voltage threshold to trip off the power converter.

5. The method according to claim 4, wherein when the given power converter has been identified as remaining connected to an AC grid following the status of connected or disconnected a current-saturation state of said given power converter is updated based on a result obtained from the current iteration.

6. The method according to any one of the previous claims, further comprising:

    i. starting with a set of initial states of all the power converters in the power system;
    ii. defining and modeling the equations of the power system that are solved in a first iteration following the applied root-finding algorithm;
    iii. updating the states of all the power converters for the upcoming iteration n+1;
    iv. further updating the current-saturation states of all the power converters that have been identified as connected; and
    v. terminating the iterative process when the states remain unchanged for all the power converters.

7. The method according to claim 2, further comprising performing the computation of a power system composed of given loads and synchronous generators, and Voltage Source Converters, the latter being defined including active power P, reactive Power Q and the current, by means of:

    transforming the initial system represented by the non-linear system of equations into a grid formed, only, by voltage sources and impedances, so that during symmetrical fault conditions, loads and synchronous generators lead to a linear system of equations that are typically modelled with a Thevenin equivalent assuming an induced electromotive force to be constant;
    treating the VSCs from the initial sets of states, assuming they are unsaturated during prefault conditions, as nonlinear elements according to:

$$\begin{cases} \boldsymbol{P} = \Re([\boldsymbol{V}]\boldsymbol{Y}^*\boldsymbol{V}^*), \\ \boldsymbol{Q} = \Im([\boldsymbol{V}]\boldsymbol{Y}^*\boldsymbol{V}^*), \end{cases}$$

8. The method according to any one of the previous claims, where the root-finding algorithm is a Newton-Raphson method for the voltage magnitude and the phase of the voltage in the buses when they are unknown.

**Fig.1**

**Fig.2**

**Fig.3**

# Fig.4

Europäisches
Patentamt

European
Patent Office

Office européen
des brevets

# EUROPEAN SEARCH REPORT

Application Number

EP 22 38 3036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ENRIQUE ACHA ET AL: "A New VSC-HVDC Model for Power Flows Using the Newton-Raphson Method", IEEE TRANSACTIONS ON POWER SYSTEMS, IEEE, USA, vol. 28, no. 3, 1 August 2013 (2013-08-01), pages 2602-2612, XP011520844, ISSN: 0885-8950, DOI: 10.1109/TPWRS.2012.2236109 * abstract * * Sections II and III * ----- | 1-8 | INV. H02J3/00 H02J3/38 H02J3/46 |
| A | SONG JIE ET AL: "A novel methodology for effective short-circuit calculation in offshore wind power plants considering converter limitations", ELECTRIC POWER SYSTEMS RESEARCH, vol. 211, 13 July 2022 (2022-07-13), page 108352, XP093038383, AMSTERDAM, NL ISSN: 0378-7796, DOI: 10.1016/j.epsr.2022.108352 * Sections 2 and 3 * ----- | 1-8 | |
| A,D | CN 110 718 918 A (UNIV CHONGQING) 21 January 2020 (2020-01-21) * paragraph [0070] – paragraph [0152] * ----- | 1-8 | TECHNICAL FIELDS SEARCHED (IPC) H02J |

The present search report has been drawn up for all claims

| Place of search | Date of completion of the search | Examiner |
|---|---|---|
| Munich | 11 April 2023 | Chabas, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 3036

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2023

| Patent document cited in search report | | Publication date | Patent family member(s) | Publication date |
|---|---|---|---|---|
| CN 110718918 | A | 21-01-2020 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102522746 A

- CN 110718918 A